# EUROPÄISCHE PATENTSCHRIFT

(11) **EP 0 388 798 B1**
(45) Veröffentlichungstag und Bekanntmachung des Hinweises auf die Patenterteilung: **02.03.1994**
(21) Anmeldenummer: 90104914.8
(22) Anmeldetag: 15.03.1990
(51) Int. Cl.: H04B 3/46

(54) **Anordnung zum Speichern der Adresse einer In-Betrieb-Überwachung-Prozessoreinheit**
Device for storing the address of an in-operation monitoring processing unit
Dispositif pour emmagasiner l'adresse d'une unité processeur de surveillance en service

(30) Priorität: 21.03.1989 DE 3909266
(43) Veröffentlichungstag der Anmeldung: 26.09.1990
(73) Patentinhaber: SIEMENS AKTIENGESELLSCHAFT, 80333 München (DE); Philips Patentverwaltung GmbH, 22335 Hamburg (DE); Philips Electronics N.V., 5621 BA Eindhoven (NL)
(72) Erfinder: Herrmann, Karl, Dr., D-8501 Eckental (DE); Musil, Gerhard, D-8000 München 70 (DE); Narjes, Ferdinand, D-8000 München 70 (DE)
(74) Vertreter: Fuchs, Franz-Josef, Dr.-Ing.

(56) Entgegenhaltungen:
- EP-A- 0 143 489
- EP-A- 0 161 344
- WO-A-89/08359
- DE-A- 3 622 988

## Beschreibung

Die Erfindung bezieht sich auf eine wie im Oberbegriff des Patentanspruchs 1 angegebene In-Betrieb-Überwachung-Prozessoreinheit.

Eine Anordnung mit einer derartigen Prozessoreinheit wurde bereits in der älteren Patentanmeldung WO-A-8908359 (8-9-1989) vorgeschlagen. Die Anordnung nach dem älteren Vorschlag gestattet es, die Prozessoreinheiten selbsttätig zu adressieren. Insbesondere ist es dabei möglich, Geräte mit Prozessoreinheiten für eine In-Betrieb-Überwachung von Nachrichten-, vorzugsweise Digitalsignal-Übertragungsstrecken selbsttätig zu adressieren.

Die Anordnung zur In-Betrieb-Überwachung arbeitet nach einem Aufrufverfahren, das eine zentrale Überwachung von Digitalsignal-Übertragungsnetzen mit Linien-, Abzweig- und Sternstruktur gestattet und die Vorteile einer Selbstadressierung des gesamten Netzes bietet, so daß eine aufwendige und fehlerintensive manuelle Voreinstellung von Adressen entfällt.

Dabei erden die Prozessoreinheiten, die über ein Telegramm-übertragungsnetz miteinander verbunden sind, selbsttätig auf verschiedene Adressen eingestellt. Zum Speichern der Adresse dient jeweils ein Speicher, der in der betreffenden Prozessoreinheit enthalten ist.

Wird eine die Prozessoreinheit enthaltende Baugruppe oder ein diese Baugruppe enthaltender Einsatz durch einen anderen ersetzt, so kann man mit Hilfe des Adressierverfahrens eine Neuadressierung aller Prozessoreinheiten der Einrichtung zur In-Betrieb-Überwachung vornehmen.

Aufgabe der Erfindung ist es, im Falle eines Austausches einer bereits adressierten Prozessoreinheit die neu verwendete Prozessoreinheit mit der Adresse der ersetzten Prozessoreinheit zu versehen, ohne daß es hierzu erforderlich ist, die ganze Strecke neu zu adressieren.

Gemäß der Erfindung wird die Anordnung zur Lösung dieser Aufgabe in der im kennzeichnenden Teil des Patentanspruchs 1 angegebenen Weise ausgebildet. Dabei sind die Baueinheiten, mit denen die Prozessoreinheit zusammen in ein und demselben Einsatz untergebracht ist, insbesondere Zwischenregeneratoren einer Digitalsignal-Übertragungsstrecke, Leitungsendgeräte oder dergleichen.

Durch die erfindungsgemäßen Maßnahmen ergibt sich eine Sicherung der Teilnehmeradresse, so daß in vorteilhafter Weise eine neu in den Einsatz gesteckte Prozessoreinheit selbsttätig die Adresse annimmt, die die an dieser Stelle zuvor befindliche Prozessoreinheit hatte. Auf diese Weise ist sichergestellt, daß nicht zwei Prozessoreinheiten bzw. Überwachungsbaugruppen mit der gleichen Adresse im Netz vorhanden sind.

Vorteilhafte weitere Ausgestaltungen der Erfindung ergeben sich aus den Untertansprüchen.

Die Erfindung wird anhand der in den Figuren dargestellten Ausführungseispielen näher erläutert.

Es zeigen
- Fig. 1: ein Blockschaltbild eines Ortungsabschnittes einer Einrichtung zur In-Betrieb-Überwachung und
- Fig. 2: ein Blockschaltbild eines aus mehreren Baugruppen bestehenden Einsatzes mit einer Überwachungsbaugruppe.

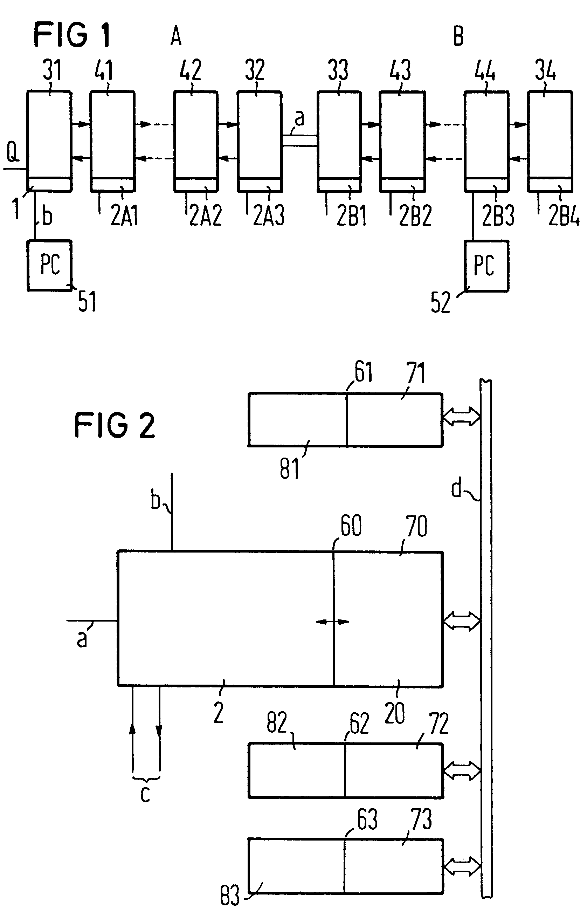

Der in Figur 1 gezeigte Ortungsabschnitt umfaßt eine Nachrichtenübertragungsstrecke mit zwei in Kette geschalteten Digitalsignal-Grundleitungsabschnitten A und B, die im folgenden als Leitungsabschnitte A und B bezeichnet werden. Der Leitungsabschnitt A erstreckt sich vom Leitungsendgerät 31 über die Zwischenregeneratoren 41 und 42 zum Leitungsendgerät 32. Der Leitungsabschnitt B umfaßt die Leitungsendgeräte 33 und 34 sowie die dazwischen angeordneten Zwischenregeneratoren 43 und 44. Die strichlierte Darstellung der Vierdrahtübertragungsstrecke zwischen den Zwischenregeneratoren 41 und 42 bzw. 43 und 44 bringt zum Ausdruck, daß die Leitungsabschnitte A und B gegebenenfalls weitere Zwischenregeneratoren enthalten können. Außerdem kann das gezeigte Liniennetz insbesondere zu einem Sternnetz ergänzt sein.

Mit Hilfe einer Einrichtung zur In-Betrieb-Überwachung lassen sich die Funktionsfähigkeit und Übertragungseigenschaften der Nachrichtenübertragungsstrecke überwachen.

Zu diesem Zweck ist in den Leitungsendgeräten 31...34 und den Zwischenregeneratoren 41...44 jeweils eine Prozessoreinheit vorgesehen, die sich als Master oder als Slave betreiben läßt. Die Prozessoreinheit 1 im Leitungsendgerät 31 ist als zentrale Aufruf- bzw. Steuereinheit bzw. Master eingestellt. Die weiteren Prozessoreinheiten 2A1...2B4 sind jeweils als Unterstation bzw. Slave eingestellt und erhalten jeweils über einen internen Bus Überwachungsdaten von den einzelnen Geräten der zu überwachenden Nachrichtenübertragungsstrecke.

Die Prozessoreinheit 1 bildet eine Vorrichtung zur Ablaufsteuerung, die die weiteren Prozessoreinheiten 2A1...2B4 nacheinander mittels Aufruftelegrammen mit ihren Adressen aufruft, deren Überwachungsdaten per Antworttelegramm erhält und diese auswertet. Anstelle der als Master eingestellten Prozessoreinheit 1 kann ein Ortungsmodul vorgesehen sein, mit dessen Hilfe auftretende Fehler geortet werden können.

Die Prozessoreinheiten werden zweckmäßigerweise jeweils durch einen Mikroprozessor gesteuert. Sie haben im Leitungsendgerät 31...34 einen Anschluß und im Zwischenregenerator 41...44 zwei Anschlüsse - je einen für beide Richtungen - zur Ein- und Auskopplung in den dem Nutzsignal überlagerten Hilfskanal. Zusätzlich haben sie jeweils einen Anschluß a für einen Netzknoten.

Innerhalb eines der Leitungsabschnitte A und B werden die Überwachungsdaten der Leitungsendgeräte und der Zwischenregeneratoren von einer Prozessoreinheit zur nächsten Prozessoreinheit jeweils über einen Telemetriekanal übertragen, der ein dem Nutzsignal überlagerter Hilfskanal ist. Die Übertragungsstrecke gehört insbesondere einer Übertragungseinrichtung der synchronen digitalen Hierarchie an. In diesem Fall sind die Leitungsendgeräte 31...34 synchrone Leitungsmultiplexer und die Zwischenregeneratoren 41...44 synchrone Leitungsregeneratoren. Der Telemetriekanal ist in diesem Fall einer der einer nationalen Benutzung vorbehaltenen Kanäle des sogenannten Overheads.

Die Verbindung zwischen den Leitungsabschnitten A und B erfolgt über einen bidirektionalen Datenbus a, der die Leitungsendgeräte 32 und 33 miteinander verbindet.

An die Leitungsendgeräte 31...34 und Zwischenregeneratoren 41...44 läßt sich jeweils ein Personalcomputer anschließen, mit dessen Hilfe die Überwachungsdaten des gesamten Ortungsbereichs ausgewertet und dargestellt werden können.

Über die Schnittstelle Q des Leitungsendgerätes 31, das die als Master eingestellte Prozessoreinheit 1 enthält, ist eine Abfrage von Daten und das Absetzen von Steuerbefehlen in Verbindung mit einem nicht dargestellten Signalsammelsystem möglich.

Das In-Betrieb-Überwachungsverfahren arbeitet nach dem Polling-Prinzip. Der Master fragt die zu überwachenden Geräte - Zwischenregeneratoren und Leitungsendgeräte - zyklisch mit ihrer Adresse durch Aussenden eines Aufruftelegrammes ab. Innerhalb dieses Zyklus ruft er auch die eigene Station auf und sendet anschließend wie ein Slave die Daten seiner Station aus. Er empfängt die von den aufgerufenen Geräten gesendeten Antworttelegramme, vergleicht die eingehenden Daten mit eingegebenen Schwellwerten und löst bei Überschreiten der Schwellwerte Alarme aus.

Die Vergabe der Adressen an die einzelnen Geräte erfolgt nach einem automatischen Adressierverfahren. Die Adressenvergabe der Geräte ist hierarchisch aufgebaut. Ein Adressbyte ist für die Adressierung von Leitungsabschnitten, ein weiteres Adressenbyte für die Adressierung der Prozessoreinheiten innerhalb eines Leitungsabschnittes vorgesehen. Diese Art der Adressierung ist in Figur 1 dadurch zum Ausdruck gebracht, daß dem für die Prozessoreinheiten verwendeten Bezugszeichen 2 jeweils die Adresse, bestehend aus einer Angabe des Leitungsabschnittes und einer Zählnummer innerhalb des Leitungsabschnittes angefügt ist.

Die Adressierung der Prozessoreinheiten kann entsprechend dem eingangs genannten älteren Vorschlag so ablaufen, daß eine an das eine der beiden Enden des Übertragungsabschnittes angeschlossene und im Adressierbetrieb als Adressiereinheit dienende Prozessoreinheit ein eine Adresse enthaltendes Adressiertelegramm an den Übertragungsabschnitt abgibt und daß die Prozessoreinheiten des Übertragungsabschnittes die Adressiertelegramme und/oder ein neues Adressiertelegramm nach einer Inkrementierung der im Adressiertelegramm enthaltenen Adresse weitergeben und daß die Prozessoreinheit des Übertragungsabschnittes die Adresse des empfangenen oder ausgesendeten Adressiertelegramms jeweils als ihre eigene Adresse speichert.

Figur 2 zeigt ein Blockschaltbild eines Einsatzes, in dem zusätzlich zu der Prozessorbaugruppe 60 die weiteren Baugruppen 61, 62 und 63 untergebracht sind. Die Baugruppen 61...63 enthalten Funktionseinheiten 81...83, die Jeweils mit einem nicht dargestellten EEPROM versehen sind. Die Prozessorbaugruppe 60 und die Baugruppen 61, 62 und 63 sind über den bidirektionalen Bus d miteinander verbunden. Der Informationsaustausch über den Bus d wird von dem in der Prozessorbaugruppe 60 enthaltenen und der Prozessoreinheit 2 zugeordneten Zentralstation 70 und zwar durch einen sogenannten Bus-Master gesteuert. Die Zentrale 70 tauscht über den Bus d Informationen it den Unterstationen, sogenannten Bus-Slaves 71, 72 und 73 aus, die in den Baugruppen 61, 62 und 63 angeordnet sind.

Die einzelnen Baugruppen 61...63 enthalten EEPROM's, um in diesen kennzeichnende Daten der Baugruppen wie z. B. Herstellerkennzeichen, Baugruppenbezeichnungen oder Einstellungen dauerhaft speichern zu können.

Die Baugruppen 61...63 sind untereinander durch ein internes Netz verbunden, insbesondere durch einen oder mehrere Busse. Einer davon ist der interne Gerätebus d, über den Störungen der Baugruppen 61...63 von der Prozessoreinheit 2 abgefragt werden können. Über diesen Bus werden zweckmäßigerweise auch Geräteeinstellungen vorgenommen, die dann lokal in den EEPROM's gespeichert werden.

Die Adresse der Prozessoreinheit 2 wird in einem RAM der Prozessoreinheit 2 selbst und zusätzlich außerhalb der Prozessoreinheit 2 in wenigstens einem EEPROM gespeichert. Dabei kann es sich als zweckmäßig erweisen, das EEPROM auf einer Leiterplatte anzuordnen, die sich an der Rückseite des Einsatzes befindet und mit diesem dauerhaft verbunden ist.

Nach Figur 2 befinden sich die EEPROM's auf anderen Baugruppen 61...63 desselben Einsatzes. Die EEPROMS's gehören Jeweils einer austauschbaren Einheit an, die sich bei einem Defekt leicht auswechseln läßt.

Die Baugruppen 61...63 sind mit der Prozessoreinheit 2 so verbunden, daß die EEPROM's der Baugruppen 61...63 von der Prozessoreinheit 2 aus beschrieben und gelesen werden könnten.

Ist im Einsatz bereits das erwähnte interne Netz, insbesondere gebildet durch einen Bus, vorhanden, über das zentral die EEPROM's beschrieben und gelesen werden können, so ist es von Vorteil, auch die Adresse der Prozessoreinheit über dieses Netz zu verteilen, so daß nur ein geringer Zusatzaufwand nötig ist. Dieses Netz ist im allgemeinen der Bus der Uberwachung, über den auch Einstellungen vorgenommen werden können, die Jeweils in den Baugruppen EEPROM's dauerhaft abgespeichert werden.

Als weiterer Vorteil des Abspeicherns der Adresse auf den Baugruppen 61...63 kommt hinzu, daß beim Auswechseln einer solchen Baugruppe deren letzter Einsatzort weiter festgehalten und somit gegebenenfalls die Diagnose von Fehlern erleichtert wird.

Wird eine der Baugruppen 61...63 bei in Betrieb befindlichen Einsatz gesteckt, so wird dies von der Überwachung erkannt und ein Abspeichern der aktuellen Adresse der Prozessoreinheit 2 in das EEPROM der Baugruppe veranlaßt.

Vor dem Einstecken einer Prozessoreinheit oder vor dem Einschalten der Betriebsspannung können eine oder mehrere der anderen Baugruppen 61...63 des Einsatzes ausgewechselt worden sein. Die Prozessoreinheit 2 führt daher nach ihrer Inbetriebnahme und dem Lesen der Adressen aus den EEPROM's der Baugruppen 61...63 zweckmäßigerweise eine Plausibilitätskontrolle durch. Das ist im einfachsten Fall ein Mehrheitsentscheid.

Die Sicherheit der Kontrolle kann dadurch weiter erhöht werden, daß beim Vorliegen verschiedener Adressen eine entsprechende Meldung ergeht und eine Bestätigung des Resultats von einer anderen Stelle, z. B. über einen örtlich angeschlossenen Rechner oder eine sonstige Bedieneinheit verlangt wird.

Ist eine Baugruppe, auf der bereits eine Prozessoreinheit-Adresse abgespeichert ist, vor ihrer Wiederverwendung repariert oder überprüft worden, so wird diese Adresse zweckmäßigerweise beim Prüfen gelöscht oder durch eine zusätzlich dabei eingespeicherte Information für ungültig erklärt. Eine solche Baugruppe kann dann nicht mehr zu einem Fehlresultat beim Lesen der EEPROM's beitragen.

Den gleichen Vorteil erreicht man auch, wenn eine Baugruppe erst gezogen werden darf, wenn vorher ein Vorgang gestartet wurde, bei dem die durch die Prozessoreinheit eingeschriebene Adresse gelöscht oder für ungültig erklärt wurde.

Ferner ist es vorteilhaft, wenn die Überwachungsbaugruppe des Einsatzes oder derjenige Teil einer Baugruppe, der für deren Überwachung zuständig ist, bei einem erkannten Defekt dieser Baugruppe, der voraussichtlich zu deren Auswechseln führen wird, die auf der betroffenen Baugruppe gespeicherte Prozessoreinheit-Adresse löscht oder für ungültig zu erklärt.

Durch die genannten Maßnahmen wird erreicht, daß nicht zwei Slaves mit der gleichen Adresse im Netz vorhanden sind.

Auf die beschriebene Weise wird Jeweils die Adresse der Prozessoreinheit nach der Adressierung im RAM der Prozessorbaugruppe und zuätzlich in dem zusätzlichen EEPROM des Einsatzes oder in den EEPROM's der übrigen Baugruppen gespeichert.
Die Prozessorbaugruppe liest nachdem
- sie neu in den Einsatz gesteckt wurde oder
- ihre Stromversorgung abgeschaltet war oder
- ihr interner Watch-Dog angesprochen hatte,
also der Adressenspeicher im RAM gelöscht wurde, die Adressen aus dem zusätzlichen EEPROM des Einsatzes oder aus dem EEPROM der übrigen Baugruppen aus und übernimmt diese gegebenenfalls nach Plausibilitätsprüfung in ihren Adressenspeicher im RAM.

## Patentansprüche

1. Anordnung zum Speichern der Adresse einer Prozessoreinheit, die einer Einrichtung zur In-Betrieb-Überwachung einer Nachrichten-Übertragungseinrichtung angehört, bei der eine Aufrufeinheit und mit Adressen versehene Prozessoreinheiten (2) über ein Telegrammübertragungsnetz derart Informationen miteinander austauschen, daß Abfragetelegramme der Aufrufeinheit und Antworttelegramme der Prozessoreinheiten (2) übertragen werden und wobei die Prozessoreinheiten (2) im Verlaufe eines Adressierverfahrens mit Adressen versehen werden, die Jeweils speicherbar sind,
**dadurch gekennzeichnet,**
daß die Prozessoreinheit (2) als Baugruppe ausgebildet und mit weiteren Baugruppen (61, 62, 63) in einen gemeinsamen Einsatz einsteckbar ist und daß die Adresse der Prozessoreinheit (2) in einem EEPROM speicherbar ist, das im Einsatz auf einer Leiterplatte angeordnet ist, die nicht der Baugruppe der Prozessoreinheit (2) angehört, und mit der Prozessoreinheit (2) elektrisch derart verbunden ist, daß das EEPROM von der Prozessoreinheit (2) aus beschreibbar und lesbar ist.

2. Anordnung nach Anspruch 1,
**dadurch gekennzeichnet,**
daß das EEPROM auf einer Leiterplatte angeordnet ist, die an der Rückseite des Einsatzes angeordnet ist, und mit diesem fest verbunden ist.

3. Anordnung nach Anspruch 1,
**dadurch gekennzeichnet,**
daß wenigstens eine der weiteren Baugruppen (61, 62, 63) des Einsatzes ein EEPROM enthält, in dem die Adresse der Prozessoreinheit speicherbar ist.

4. Anordnung nach Anspruch 3,
**dadurch gekennzeichnet,**
daß der Einsatz einen Überwachungsbus (d) enthält, über den die Prozessoreinheit mit wenigstens einem Teil der Baugruppen Informationen austauscht und daß das EEPROM über den Bus beschreibbar und lesbar ist.

5. Anordnung nach Anspruch 3 oder 4,
**dadurch gekennzeichnet,**
daß die Prozessoreinheit (2) beim Einsetzen einer der Baugruppen (61, 62, 63) in den in Betrieb befindlichen Einsatz das Abspeichern ihrer Adresse in das EEPROM dieser Baugruppe veranlaßt.

6. Anordnung nach Anspruch 5,
**dadurch gekennzeichnet,**
daß die Prozessoreinheit (2) nach ihrer Inbetriebnahme und dem Lesen der im Einsatz gespeicherten Adressen eine Plausibilitätskontrolle durchführt.

7. Anordnung nach einem der Ansprüche 2 bis 6,
**dadurch gekennzeichnet,**
daß die Prozessoreinheit (2) bei Erkennen vorgegebener Fehler einer Baugruppe jeweils die im EEPROM dieser Baugruppe gespeicherte Adresse löscht oder sperrt.

8. Anordnung nach einem der Ansprüche 1 bis 6,
**dadurch gekennzeichnet,**
daß wenigstens eine der Baugruppen eine Überwachungsvorrichtung enthält, die bei Erkennen vorgegebener Fehler die im EEPROM dieser Baugruppe gespeicherte Adresse löscht oder sperrt.

## Claims

1. Arrangement for storing the address of a processor unit belonging to a device for in-service monitoring of a message transmission system, in which a polling unit and processor units (2) provided with addresses exchange information with one another via a message transmission network in such a way that interrogation messages of the polling unit and reply messages of the processor units (2) are transmitted, and in which the processor units (2) are provided with addresses in the course of an addressing procedure which can be stored in each case, characterized in that the processor unit (2) is designed as a module and can be inserted with further modules (61, 62, 63) into a common plug-in unit, and in that the address of the processor unit (2) can be stored in an EEPROM arranged in the plug-in unit on a circuit board that does not belong to the module of the processor unit (2), and is electrically connected to the processor unit (2) in such a way that the EEPROM can be written and read by the processor unit (2).

2. Arrangement according to Claim 1, characterized in that the EEPROM is arranged on a circuit board which is arranged on the rear of the plug-in unit and is attached firmly thereto.

3. Arrangement according to Claim 1, characterized in that at least one of the further modules (61, 62, 63) of the plug-in unit contains an EEPROM in which the address of the processor unit can be stored.

4. Arrangement according to Claim 3, characterized in that the plug-in unit contains a monitoring bus (d), via which the processor unit exchanges information with at least some of the modules, and in that the EEPROM can be written and read via the bus.

5. Arrangement according to Claim 3 or 4, characterized in that when one of the modules (61, 62, 62) is inserted into the plug-in unit currently in operation, the processor unit (2) causes its address to be stored in the EEPROM of said module.

6. Arrangement according to Claim 5, characterized in that after it has started operation and the addresses stored in the plug-in unit have been read, the processor unit (2) performs a plausibility check.

7. Arrangement according to one of Claims 2 to 6, characterized in that if it detects predetermined errors in a module, the processor unit (2) deletes or blocks the address stored in the EEPROM of said module in each case.

8. Arrangement according to one of Claims 1 to 6, characterized in that at least one of the modules contains a monitoring device which deletes or blocks the address stored in the EEPROM of said module if predetermined errors are detected.

## Revendications

1. Dispositif pour mémoriser l'adresse d'une unité à processeur, qui fait partie d'un dispositif servant à contrôler en fonctionnement un dispositif de transmission d'informations, et dans lequel une unité d'appel et des unités à processeur (2) pourvues d'adresses échangent entre elles des informations par l'intermédiaire d'un réseau de transmission de télégrammes de telle sorte que des télégrammes d'interrogation de l'unité d'appel et des télégrammes de réponse des unités à processeur (2) sont transmis, et dans lequel les unités à processeur (2) sont pourvues d'adresses, qui peuvent être respectivement mémorisées, au cours d'un procédé d'adressage, caractérisé par le fait
que l'unité à processeur (2) est réalisée sous la forme d'un module et peut être enfichée avec d'autres modules (61, 62, 63) dans un insert commun et que l'adresse de l'unité à processeur (2) peut être mémorisée dans une mémoire EEPROM, qui, dans l'insert, est disposée sur une plaquette à circuits imprimés, qui ne fait pas partie du module de l'unité à processeur (2), et est raccordée électriquement à l'unité à processeur (2) de telle sorte que la mémoire EEPROM peut être enregistrée et lue à partir de l'unité à processeur (2).

2. Dispositif suivant la revendication 1, caractérisé par le fait que la mémoire EEPROM est disposée sur une plaquette à circuits imprimés, qui est disposée sur la face arrière de l'insert et est raccordée de façon fixe à ce dernier.

3. Dispositif suivant la revendication 1, caractérisé par le fait qu'au moins l'un des autres modules (61, 62, 63) de l'insert contient une mémoire EEPROM, dans laquelle peut être mémorisée l'adresse de l'unité à processeur.

4. Dispositif suivant la revendication 3, caractérisé par le fait que l'insert contient un bus de contrôle (d), au moyen duquel l'unité à processeur échange des informations avec au moins une partie des modules et que la mémoire EEPROM peut être enregistrée et lue par l'intermédiaire du bus.

5. Dispositif suivant la revendication 3 ou 4, caractérisé par le fait que lors de l'insertion de l'un des modules (61, 62, 63), dans l'insert en fonctionnement, l'unité à processeur (2) déclenche la mémorisation de son adresse dans la mémoire EEPROM de ce module.

6. Dispositif suivant la revendication 5, caractérisé par le fait qu'après sa mise en service et après la lecture des adresses mémorisées dans l'insert, l'unité à processeur (2) exécute un contrôle de vraisemblance.

7. Dispositif suivant l'une des revendications 2 à 6, caractérisé par le fait que lors de l'identification de défauts prédéterminés d'un module, l'unité à processeur (2) efface ou bloque respectivement l'adresse mémorisée dans la mémoire EEPROM de ce module.

8. Dispositif suivant la revendication 1 à 6, caractérisé par le fait qu'au moins l'un des modules contient un dispositif de contrôle qui, dans le cas de l'identification de défauts prédéterminés, efface ou bloque l'adresse mémorisée dans la mémoire EEPROM de ce module.
